# EUROPÄISCHE PATENTSCHRIFT

(11) **EP 2 841 251 B1**
(45) Veröffentlichungstag und Bekanntmachung des Hinweises auf die Patenterteilung: **12.10.2016**
(21) Anmeldenummer: 13709364.7
(22) Anmeldetag: 05.03.2013
(51) Int. Cl.: B29C 49/04, B29C 49/24, B29C 49/46, B29C 49/36

(54) **VORRICHTUNG ZUR ERZEUGUNG UND BEFÜLLUNG EINES FÜLLGUTBEHÄLTERS MIT KUNSTSTOFF-LINER**
DEVICE FOR PRODUCING AND FILLING A FILLING MATERIAL CONTAINER WITH PLASTIC LINER
DISPOSITIF DE FABRICATION ET DE REMPLISSAGE D'UN CONTENANT PRÉSENTANT UNE DOUBLURE EN PLASTIQUE

(30) Priorität: 23.04.2012 DE 102012206636
(43) Veröffentlichungstag der Anmeldung: 04.03.2015
(73) Patentinhaber: Krones AG, 93073 Neutraubling (DE)
(72) Erfinder: FÜHRER, Kaj, 93073 Neutraubling (DE)
(74) Vertreter: Grünecker Patent- und Rechtsanwälte PartG mbB
(86) Internationale Anmeldenummer: PCT/EP2013/054374
(87) Internationale Veröffentlichungsnummer: WO 2013/159971

(56) Entgegenhaltungen:
- EP-A1- 2 279 848
- EP-A1- 2 431 058
- EP-A2- 2 388 125
- WO-A1-91/08100
- DE-A1- 4 137 449
- DE-A1-102008 008 945
- DE-U1-202008 018 108

## Beschreibung

Die Erfindung betrifft eine Vorrichtung zum Erzeugen und Befüllen eines Füllgutbehälters, insbesondere eines PET-Behälters, in welchen ein Kunststoff-Liner hineinextrudiert wurde.

### Hintergrund

Im Stand der Technik gibt es bereits Vorrichtungen, welche Füllgutbehälter mit einem zusätzlichen Kunststoff-Liner ausstatten.

So zeigt beispielsweise die DE 3500347 ein Verfahren zum Herstellen von Hohlkörpern mit mehrschichtiger Außenwandung sowie eine Vorrichtung zum Herstellen solcher Hohlkörper. Dabei wird ein Hohlkörper zur mehrfachen Verwendung als Mehrwegverpackung ausgebildet, indem man ihn aus ineinandergeschachtelten Behältern herstellt. Dies wird erreicht, indem innerhalb eines jeweils äußeren Behälters ein innerer Behälter mit Hilfe einer Kunststoffblasanlage hergestellt wird. Dabei stellt der jeweils zur Verfügung stehende äußere Behälter die Form für den inneren Behälter dar. Durch den mehrschichtigen Aufbau kann beispielsweise in einem Recyclingverfahren jeweils nur die innerste Schicht entfernt werden und der Behälter dann von neuem befüllt und verwendet werden.

Die DE 1479011 zeigt ebenfalls eine Beschichtung von Behältern, die auch aus Kunststoff sein können, durch Einführen eines unten geschlossenen warmplastischen Schlauchs, Abschneiden und Aufblasen durch Druckluft aus einer Düse. Der entstehende Überdruck zwischen dem Schlauch und dem Behälter wird hier beispielsweise durch Perforation abgesaugt. Abhängig von der Stärke des zu beschichtenden Behälters wird in diesem Dokument vorgeschlagen, entweder eine zusätzliche äußere Blasform anzubringen, wie sie beim normalen Extrusionsverfahren verwendet wird oder, falls der Behälter selbst dem entstehenden Druck standhalten kann, nur den Behälter als Blasform zu benutzen. Das vorgestellte Verfahren dient hier letztlich dem Schutz billiger Massenartikel, wie beispielsweise Blechdosen, Pappbecher, Holzgefäße oder Ähnlichem gegen die Einwirkung der darin enthaltenen Stoffe.

Weiterhin ist aus der EP 2 431 058 A1 bekannt, einen isolierten Bereich um ein Blasrad zum Formen von Behältern aus Vorformlingen zu schaffen.

Aus der EP 2 388 125 A2 ist ferner bekannt, eine Blasform vorzusehen, in der ein Vorformling zu einem Behälter ausgeformt werden kann, wobei die Blasform durch eine Beaufschlagung mit Druckluft mit einer sterilisierenden Temperatur sterilisiert wird.

Aus der EP 2 279 848 A1 ist das Ausformen eines Behälters mittels Druckluft bekannt, wobei zwischen die Blasform und die äußere Oberfläche des Behälters ein flüssiges Medium eingebracht wird, sodass das Material des Behälters an der Oberfläche der Blasform entlang gleitet.

Die DE 10 2008 008 945 A1 zeigt einen Ventilblock zum Abfüllen von Flüssigkeiten in Behältnisse, die aus einem, eine mikrobielle Substanz aufweisenden Kunststoff bestehen.

Darüber hinaus ist aus der DE 4 137 449 A1 ein Verfahren zum Anbringen einer dünnwandigen Innenauskleidung in einem Behälter bekannt. Überschüssige Luft zwischen der Innenauskleidung und dem Behälter kann durch die Öffnung des Behälters entweichen.

Ferner ist aus der DE 20 2008 018 108 U1 eine Vorrichtung zum Umformen von Kunststoffvorformlingen zu Kunststoffbehältnissen bekannt. Die Vorrichtung weist dabei einen Reinraum auf, innerhalb dessen die Kunststoffvorformlinge transportiert werden können.

Die WO 91/08100 zeigt ebenfalls das Hineinextrudieren eines Kunststoff-Liners in einen bereits vorhandenen Behälter. Dabei umfasst der Liner einen wesentlich geringeren Anteil an der Gesamtmasse des fertigen Produkts, weshalb die äußere Schale der Flasche als Exoskelett mehrfach verwendet werden kann. Ist der Liner so konstruiert, dass er aus der Schale entfernt werden kann, so kann die Schale in einem Recyclingzyklus immer wieder neu mit einem Liner versehen werden und ohne Berücksichtigung des Risikos der Kontamination der Schale wiederverwendet werden. Vorteil ist hier die häufige Wiederverwertbarkeit der Schale und die einfache Möglichkeit des Recyclings.

Die EP 1996384 zeigt ein weiteres Verfahren, bei dem ein aus wenigstens zwei Schläuchen bestehender Vorformling coextrudiert wird. Dabei besteht der Außenbehälter aus einer wesentlich steiferen Form als der Innenbehälter, welcher leicht verformbar sein soll. Der Behälter ist so konstruiert, dass der Innenbeutel sich von dem Außenbehälter lösen und zusammenziehen kann, wenn er seinen Inhalt abgibt.

### Aufgabe

Der Erfindung liegt die Aufgabe zugrunde, eine Vorrichtung zum Erzeugen und Befüllen eines Füllgutbehälters, insbesondere eines PET-Behälters zu entwickeln, wobei der Behälter und der Vorgang der Befüllung hohe Qualitätsstandards erfüllen und die Befüllung aseptisch erfolgen soll.

### Lösung

Diese Aufgabe wird erfindungsgemäß durch die Vorrichtung nach Anspruch 1 und das Verfahren nach Anspruch 8 gelöst.

Die Unteransprüche beinhalten zweckmäßige Ausgestaltungen der Erfindung.

Die Erfindung zeichnet sich dadurch aus, dass der in den PET-Behälter hineinextrudierte sterile Kunststoff-Liner durch eine Isoliervorrichtung vom Hineinextrudieren in den Füllgutbehälter bis zum Befüllen wenigstens auf der Innenseite steril gehalten wird, wobei dadurch gewährleistet wird, dass die Befüllung des Füllgutbehälters, der mit dem hineinextrudierten Kunststoff-Liner ausgestattet ist, aseptisch durch die Befüllvorrichtung erfolgen kann. In diesem Zusammenhang bedeutet aseptisch, dass eine Abfüllung gemäß den Qualitätsstandards die von den abzufüllenden Flüssigkeiten erfüllt werden müssen, erfolgt, sodass eine vorgegebene Anzahl Keime pro Standardvolumen nicht überschritten wird.

In einer Ausführungsform sind die Extrusionsvorrichtung, die Isoliervorrichtung und die Befüllvorrichtung als eine Baueinheit ausgebildet. Dies ermöglicht das Sterilhalten des Innenraums des Kunststoff-Liners und insbesondere des Mündungsbereichs eines Füllgutbehälters und die Befüllung des Füllgutbehälters, wobei die Isoliervorrichtung nur einen relativ kleinen Raum, nämlich den Innenraum des Kunststoff-Liners, steril halten muss. Dies erleichtert die Erfüllung der Sterilitätsanforderungen erheblich, da beispielsweise keine komplette Produktionshalle steril gehalten werden muss.

In einer weiteren Ausführungsform ist die Befüllvorrichtung während des Hineinextrudierens innerhalb der Extrusionsvorrichtung angeordnet. Dies erlaubt einen platzsparenden Einsatz der Extrusionsvorrichtung und der Befüllvorrichtung sowie die Ausformung des Kunststoff-Liners direkt durch das einfließende Produkt.

In einer weiteren Ausführungsform ist die Vorrichtung dadurch gekennzeichnet, dass Beförderungseinrichtungen vorgesehen sind, welche den Füllgutbehälter vom Prozessabschnitt des Hineinextrudierens des Kunststoff-Liners zum Prozessabschnitt des Befüllens des Füllgutbehälters, ausgestattet mit den Hineinextrudierten Kunststoff-Linern, befördern. Die Trennung dieser Prozessabschnitte gestattet einen flexiblen Einbau der Vorrichtungen zum Hineinextrudieren des Kunststoff-Liners und zum Befüllen in bestehende Prozessabläufe und erlaubt beispielsweise auch die Einbindung zusätzlicher Prozessabschnitte zwischen dem Hineinextrudieren des Kunststoff-Liners und dem Befüllen des Füllgutbehälters.

Eine weitere Ausführungsform ist dadurch gekennzeichnet, dass eine Etikettiervorrichtung vorgesehen ist, welche vor dem Hineinextrudieren des Kunststoff-Liners eine Etikettierung der Innenseite des PET-Behälters vornimmt.

In einer weiteren Ausführungsform enthält der Kunststoff-Liner Silberionen, die zur Aufrechterhaltung der Sterilität insbesondere des Innenraums des Kunststoff-Liners beitragen.

Unter Verwendung beispielsweise dieser Vorrichtung lässt sich ein Verfahren zur Erzeugung und Befüllung von Kunststoffbehältern, insbesondere PET-Behältern, verwirklichen, wobei in den PET-Behälter ein Kunststoff-Liner, dessen Innenseite steril ist, hineinextrudiert wird und die Innenseite des Kunststoff-Liners vom Hineinextrudieren bis zum Befüllen steril gehalten wird. Dadurch kann die Befüllung des Füllgutbehälters ausgestattet mit dem hineinextrudierten Kunststoff-Liner, aseptisch stattfinden. Dies gestattet eine Befüllung von PET-Behältern, welche hohen Qualitätsstandards genügt.

In einer weiteren Ausführungsform ist das Verfahren dadurch gekennzeichnet, dass das Hineinextrudieren des Kunststoff-Liners und das Befüllen des Füllgutbehälters, ausgestattet mit dem hineinextrudierten Kunststoff-Liner in einem Prozessabschnitt stattfindet. Dies minimiert den Aufwand der Sterilisation und des Sterilhaltens der Innenseite des Kunststoff-Liners.

In einer weiteren Ausführungsform ist das Befüllrohr zur Befüllung des Füllgutbehälters ausgestattet mit dem hineinextrudierten Kunststoff-Liner und bereits während des Hineinextrudierens des Kunststoff-Liners in den PET-Behälter innerhalb der Extrusionsvorrichtung eingefahren. Dadurch kann der Kunststoff-Liner auch direkt durch das einfließende Füllgut ausgeformt werden. Dabei kann der Liner auch aus einem dehnelastischen Kunststoff geformt werden, so dass sich dieser mit Befüllung ausdehnt und beim Entleeren des Behälters sich zumindest teilweise wieder zusammenzieht.

In einer weiteren Ausführungsform findet das Hineinextrudieren des Kunststoff-Liners und das Befüllen des Füllgutbehälters, ausgestattet mit dem hineinextrudierten Kunststoff-Liner, in unterschiedlichen Prozessabschnitten statt, wobei der Füllgutbehälter, ausgestattet mit dem hineinextrudierten Kunststoff-Liner vom Prozessabschnitt des Hineinextrudierens zum Prozessabschnitt des Befüllens befördert wird. Dies erlaubt einen flexiblen Einbau des Hineinextrudierens und des Befüllens in bestehende Prozessabläufe und gestattet die Ausgestaltung des gesamten Prozesses mit möglicherweise weiteren Zwischenprozessen.

In einer weiteren Ausführungsform erfolgt vor dem Hineinextrudieren des Kunststoff-Liners eine Etikettierung der Innenseite des PET-Behälters. Dabei ist es vorteilhaft, dass das Etikett nicht bereits fest an der Innenseite des PET-Behälters angebracht werden muss sondern die abschließende Befestigung durch Anpressen des Kunststoff-Liners während des Hineinextrudierens erfolgen kann.

In einer weiteren Ausführungsform ist das Verfahren dadurch gekennzeichnet, dass der Kunststoff-Liner Silberionen enthält. Diese Silberionen können dazu beitragen, den Innenraum des Kunststoff-Liners steril zu halten, nachdem er in den PET-Behälter hineinextrudiert wurde, bis er befüllt wird.

### Kurzbeschreibung der Abbildungen

- Fig. 1: Darstellung einer ersten Ausführungsform der Vorrichtung zum Erzeugen und Befüllen von Behältern.
- Fig. 2: Darstellung einer weiteren Ausführungsform der Vorrichtung zum Erzeugen und Befüllen von Behältern.
- Fig. 3: Darstellung einer weiteren Ausführungsform der Vorrichtung zum Erzeugen und Befüllen von Behältern.
- Fig. 4a: eine weitere Darstellung der Vorrichtung in Fig. 2
- Fig. 4b: eine weitere Darstellung der Vorrichtung in Fig. 3
- Fig. 5a: Darstellung einer weiteren Ausführungsform zum Erzeugen und Befüllen mit Etikettiervorrichtung.
- Fig. 5b: eine weitere Darstellung der Vorrichtung in Fig. 5a.
- Fig. 6: Darstellung eines Produktionsablaufes unter Einbeziehung der erfindungsgemäßen Vorrichtung.

### Detaillierte Beschreibung

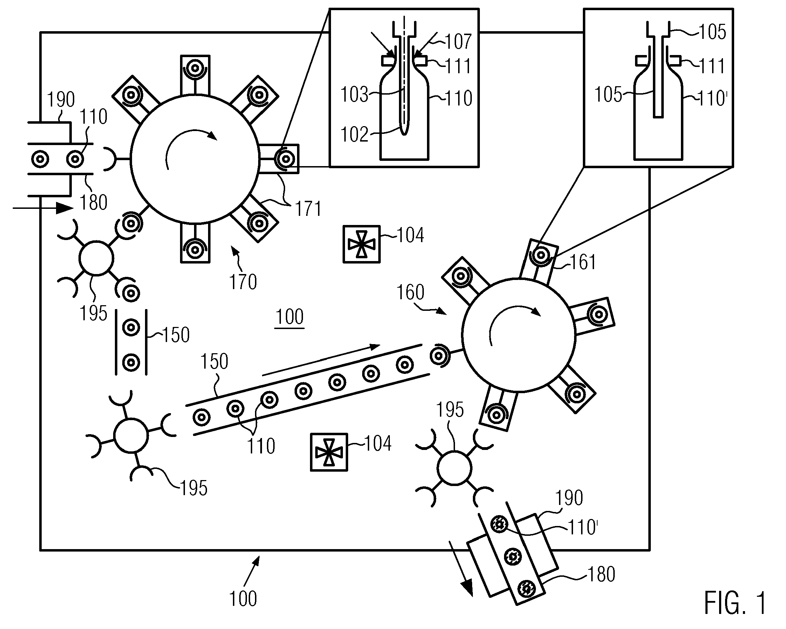

Eine Ausführungsform der erfindungsgemäßen Vorrichtung ist in Fig. 1 dargestellt. Dabei befindet sich die gesamte Vorrichtung in einem Raum 100, beispielsweise einer Produktionshalle oder ein Maschinengehäuse. In diesem Raum 100 sind eine Vorrichtung zum Hineinextrudieren 170 und eine Befüllvorrichtung 160 angeordnet. Diese sind über Förderer 150 miteinander verbunden. Die Förderung durch die Vorrichtung erfolgt hier bevorzugt im Neckhandling. Zur Gewährleistung der gewünschten Sterilitätsbedingungen kann der Raum 100, in dem alle Anlagen angeordnet sind, so ausgelegt sein, dass die komplette darin befindliche Luft die Sterilitätsanforderungen erfüllt. Das kann beispielsweise über geeignete Belüftungssysteme 104, die über Filtersysteme verfügen, erreicht werden.

Des Weiteren ist zum Erhalten der Reinheit in dem Raum 100 die Verwendung von Schleusen 190 an den herein- und herausführenden Transportvorrichtungen 180 vorteilhaft, da so keine Verunreinigungen in den Raum 100 gelangen. In dem Raum 100 kann dann das Hineinextrudieren des Kunststoff-Liners in den PET-Behälter mittels der Vorrichtung 170 und die Befüllung mittels der Vorrichtung 160 erfolgen. Dabei können die Vorrichtungen zum Hineinextrudieren 170 und zum Befüllen 160 beispielsweise als Karussellvorrichtungen ausgebildet sein. Die Übergabe oder Weitergabe der PET-Behälter 110 kann beispielsweise mittels Umlenksternen 195 erreicht werden. Die Vorrichtung zum Hineinextrudieren 170 umfasst dabei mindestens eine, vorzugsweise eine Vielzahl, von Stationen 171. Diese Stationen 171 umfassen jeweils eine Halterung 111, welche zum Halten des PET-Behälters 110, vorzugsweise am genormten Tragring, vorgesehen sind. Darüber hinaus sind Extrusionsvorrichtungen 107 vorgesehen, welche den Kunststoff-Liner 102 mittels einer Blasvorrichtung 103 in den PET-Behälter 110 hineinextrudieren können. Dabei kann der Kunststoff-Liner 102 sehr dünn sein, da der PET-Behälter bereits die nötige Stabilität des fertigen Produkts gewährleistet. Der Kunststoff-Liner 102 muss also nur die Sterilitätsanforderungen erfüllen. Er kann ferner auch farbig vorgesehen sein, wodurch Marketingzwecke erfüllt werden können oder aber auch das abzufüllende Produkt vor produktschädigendem Lichteinfall bewahrt werden kann. Der nun mit dem Kunststoff-Liner 102 ausgestattete PET-Behälter 110 kann dann mittels weiterer Umlenksterne 195 und Transportvorrichtungen 150 weiter zur Befüllvorrichtung 160 transportiert werden. Denkbar ist auch eine direkte Übergabe des PET-Behälters 110 von der Vorrichtung zum Hineinextrudieren 170 zur Vorrichtung zum Befüllen 160.

Auch die Vorrichtung zum Befüllen 160 umfasst eine, vorzugsweise eine Vielzahl von Stationen 161 zum Befüllen. Jede dieser Stationen weist dabei eine Halterung 111 auf, welche zum Halten des PET-Behälters 110 ausgebildet ist und diesen vorzugsweise am Tragring hält. Darüber hinaus sind Befüllrohre (oder allgemein Befüllvorrichtungen, die jeweils ein Befüllrohr umfassen) 105 vorgesehen, über die die PET-Behälter 110 befüllt werden können. Zu diesem Zweck sind die Befüllrohre 105 vorzugsweise in der Vertikalen beweglich gelagert, sodass sie in die PET-Behälter 110 zum Befüllen eingefahren werden können. Sind die PET-Behälter 110' so mit dem Kunststoff-Liner ausgestattet und anschließend befüllt worden, können sie aus dem Raum 100, in welchem die Reinheitsanforderungen erfüllt waren, mittels der Transportvorrichtung 180 herausgefahren werden.

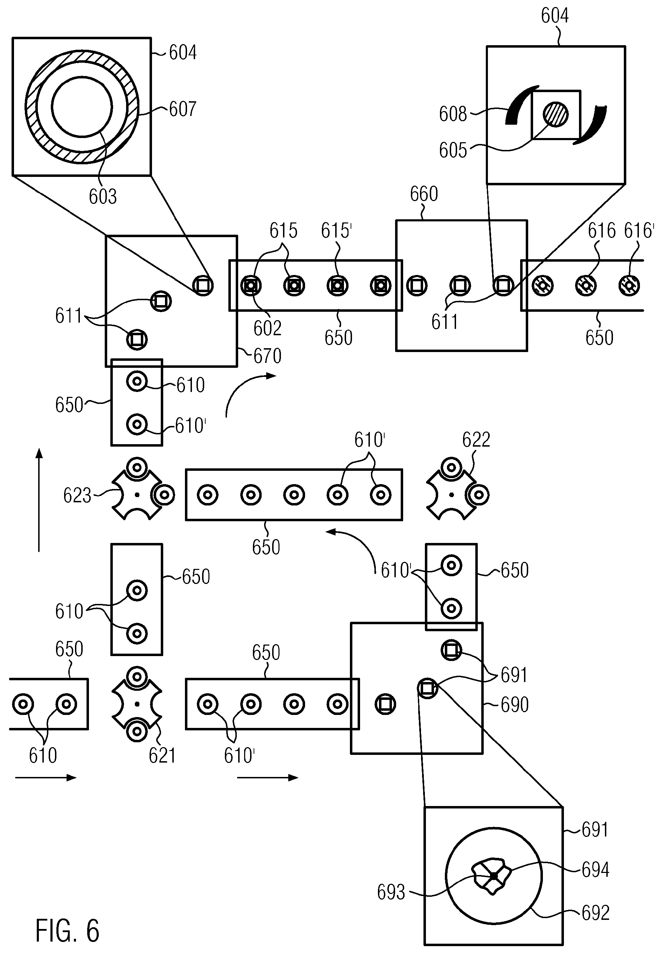

Diese Anordnung erfordert zwar die Gewährleistung der Reinheit des gesamten Raumes 100, gewährleistet aber die Sterilität des kompletten Produkts. Darüber hinaus lässt sich die Prozessführung in diesem Raum dann flexibel gestalten. Eine weitere entsprechende Ausführungsform wird in Fig. 6 diskutiert.

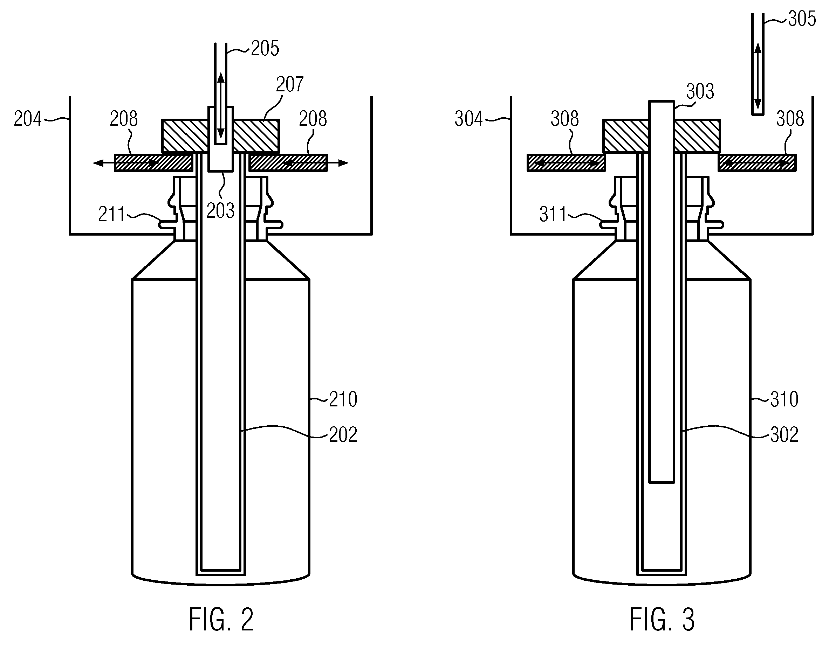

Fig. 2 zeigt eine andere Ausführungsform der erfindungsgemäßen Vorrichtung. Im Gegensatz zu der aus Fig. 1 ist hier die Isoliervorrichtung 204 so vorgesehen, dass zu jedem PET-Behälter eine separate Isoliervorrichtung 204 existiert. Hier kann die Isolierung des Innenraums des PET-Behälters 210 erreicht werden, indem durch die Seitenwände der Isoliervorrichtung 204 und eventuell eingebaute Filtersysteme die Luft im Innenraum steril gehalten wird. Man spricht in diesem Fall von einem Neckringisolator, da der Bereich des PET-Behälters oberhalb des Tragringes bzw. Neckringes steril gehalten wird. Dabei wird der PET-Behälter 210 beispielsweise durch eine Halterung am Tragring 211 gehalten. Die Isoliervorrichtung 204 kann entweder, wie hier dargestellt, die Halterung umfassen oder sie kann davon unabhängig um die Öffnung des PET-Behälters 210 angeordnet sein. Das Befüllrohr 205, die Extrusionsvorrichtung 207 zum Hineinextrudieren des Kunststoff-Liners 202 und möglicherweise ein oder mehrere Verschlusswerkzeuge 208 können in die Isoliervorrichtung 204 getrennt voneinander oder zeitgleich eingeführt werden.

Die Extrusionsvorrichtung kann weiterhin ein Blasrohr 203 aufweisen, das z.B. im Rahmen eines Blasextrusionsverfahren den Kunststoff-Liner 202 innerhalb des PET-Behälters 210 aufbläst. Dabei muss das Aufblasen des Kunststoff-Liners 202 so erfolgen, dass die verdrängte Luft zwischen dem Kunststoff-Liner 202 und dem PET-Behälter 210 entweichen kann. Das kann beispielsweise durch ein von unten nach oben erfolgendes Aufblasen oder durch Versehen des PET-Behälters 210 mit Entlüftungsschlitzen erreicht werden. Die erste Variante bietet den Vorteil, dass dem PET-Behälter 210 keine Beschädigungen zugefügt werden müssen, da die verdrängte Luft durch die Mündung entweichen kann. Dieses Vorgehen ist allerdings anfällig gegenüber Fehlern beim Aufblasen. Das Versehen des PET-Behälters mit Entlüftungsschlitzen umgeht diesen Nachteil, erfordert aber eine gegebenenfalls unerwünschte Beschädigung des PET-Behälters 210, welche anschließend je nach Anforderungen rückgängig gemacht werden kann. Denkbar ist auch eine Kombination beider Varianten. Weiterhin wäre es möglich, den Zwischenraum zwischen PET-Behälter und Kunststoff-Liner während des Extrudierens mit einem Vakuum zu beaufschlagen, beispielsweise durch Nutzung der oben erwähnten Entlüftungsschlitze.

Nachdem das Hineinextrudieren des Kunststoff-Liners 202 durch die Extrusionsvorrichtung 207 in den PET-Behälter 210 erfolgt ist, kann nach eventuell notwendiger Abkühlzeit des Kunststoff-Liners die Befüllung durch das Befüllrohr 205 erfolgen. Dabei kann das Befüllrohr 205 beweglich vorgesehen sein, so dass es in das Blasrohr 203 und damit den PET-Behälter einfahrbar ist. Nach dem Befüllen kann vorgesehen sein, dass ein möglicherweise überstehender Rand des Kunststoff-Liners 202, welcher sich noch nicht verfestigt hat, durch die seitlich angebrachten Verschlusswerkzeuge 208 abgetrennt wird. Zusammen mit dem Abtrennen können die Verschlusswerkzeuge durch Zusammendrücken des übrigen zwischen ihnen befindlichen Materials des Kunststoff-Liners 202 ein vorläufiges Verschließen des Kunststoff-Liners 202 erreichen. Das kann mittels Verschmelzen des noch weichen Materials des Kunststoff-Liners 202 erfolgen oder durch leichtes Anwärmen des Kunststoff-Liners 202 in diesem Bereich. Um das zu erreichen, können die Verschlusswerkzeuge 208 über eine Wärmezufuhr verfügen. Alternativ ist auch denkbar, dass die Verschlusswerkzeuge 208 überstehendes Material des Kunststoff-Liners 202 zunächst abtrennen und dann eine Abziehfolie auf die Mündung des PET-Behälters 210 aufbringen, die für das vorläufige Verschließen sorgt. Jede dieser Arten des vorläufigen Verschließens kann so ausgebildet sein, dass beim Öffnen eines auf die Öffnung des PET-Behälters 210 angebrachten Drehverschlusses ebenfalls der vorläufige Verschluss geöffnet wird. Da die Isoliervorrichtung 204 bis zum Befüllen dafür sorgt, dass der Innenraum des Kunststoff-Liners 202 steril bleibt und das Befüllen durch das Befüllrohr 205 ebenfalls aseptisch verläuft, kann durch das vorläufige Verschließen des Kunststoff-Liners 202 nach dem Befüllen durch die Verschlusswerkzeuge 208 eine Kontamination vor dem endgültigen Verschließen mit beispielsweise einem Schraubverschluss, verhindert werden.

Die Anordnung des Befüllrohrs 205 sowie der Extrusionsvorrichtung 207 mit dem Blasrohr 203 als in der Isoliervorrichtung 204 zentriert eingeführte Elemente, ist keinesfalls zwingend. Beliebige andere Ausführungsformen sind denkbar.

Fig. 3 zeigt eine weitere mögliche Ausführungsform der erfindungsgemäßen Vorrichtung. Das Blasrohr 305, die Extrusionsvorrichtung 307 und die Verschlusswerkzeuge 308 können dabei beweglich innerhalb der Isoliervorrichtung 304 vorgesehen sein. Sie sind dann nicht mehr, wie in Fig. 2 konzentrisch bezüglich der Öffnung des PET-Behälters 310 angeordnet, sondern können je nach Ausgestaltung der Isoliervorrichtung 304 an unterschiedlichen Positionen angeordnet sein. Für jeden Prozessschritt (Hineinextrudieren des Kunststoff-Liners 304, Befüllen und vorläufiges Verschließen) wird je eine der Vorrichtungen über die Öffnung des PET-Behälters 310 bewegt und gegebenenfalls in diesen hineingefahren. Das vergrößert den Raum, den die Isoliervorrichtung 304 jedes PET-Behälters einnimmt, erlaubt aber die Durchführung der Prozessschritte ohne dass sie durch die jeweils anderen Vorrichtungen gestört werden.

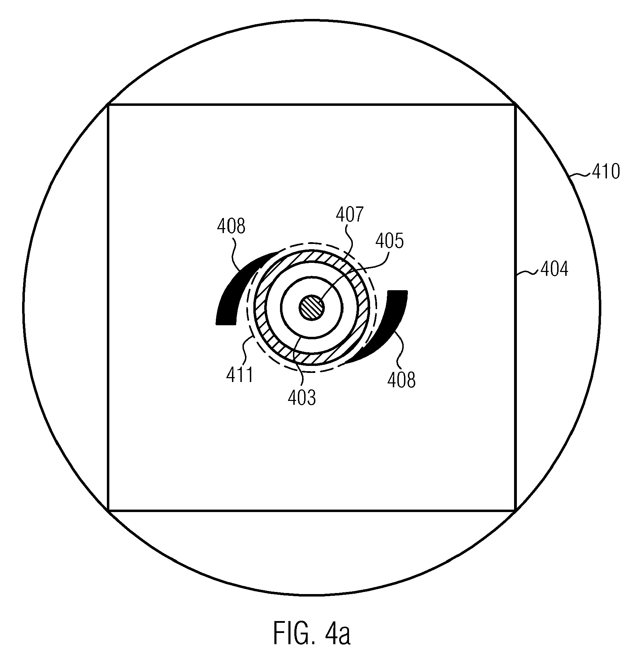

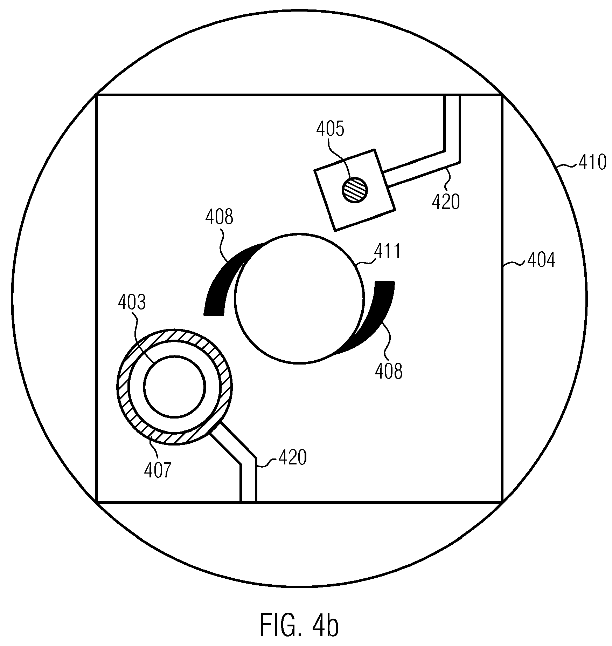

Fig. 4 zeigt eine Draufsicht der in Fig. 2 und Fig. 3 dargestellten Ausführungsformen. Fig. 4a zeigt dabei die Ausführungsform gemäß Fig. 2. Die Bestandteile der Vorrichtung sind konzentrisch um den hier gestrichelt dargestellten Tragring 411 angeordnet. Das Befüllrohr 405 ist zusammen mit dem Blasrohr 403 und der Extrusionsvorrichtung 407 konzentrisch angeordnet. Die Isoliervorrichtung 404 ist hier quadratisch dargestellt, kann aber in dieser Ausführungsform jede beliebige Form annehmen, solange das Befüllrohr 405, die Extrusionsvorrichtung 407 und die Verschlusswerkzeuge 408 in sie eingeführt werden können. So kann die Isoliervorrichtung 404 auch kanalartig ausgeführt sein, wobei sich die Isoliervorrichtung dann entlang eines Transportpfades der PET-Behälter erstreckt. Auch die Anordnung der Verschlusswerkzeuge 408 stellt hier nur eine mögliche Ausführungsform dar und kann gegebenenfalls modifiziert werden.

Fig. 4b zeigt eine Draufsicht der Ausführungsform gemäß Fig. 3. Hierbei sind die Verschlusswerkzeuge 408 innerhalb der Isoliervorrichtung 404 fest angeordnet und nur zum Verschließen und Abtrennen des hineinextrudierten Kunststoff-Liners beweglich, beispielsweise um eine Achse, gelagert. Die Extrusionsvorrichtung 407 und das Befüllrohr 405 hingegen sind an beispielsweise durch Motoren bewegliche Arme 420 montiert. Je nach Prozessschritt können das Befüllrohr 405 oder die Extrusionsvorrichtung 407, ausgestattet mit dem hier nicht sichtbaren Kunststoff-Liner und dem möglicherweise beweglich gelagerten Blasrohr 403 konzentrisch über dem PET-Behälter 410 positioniert werden.

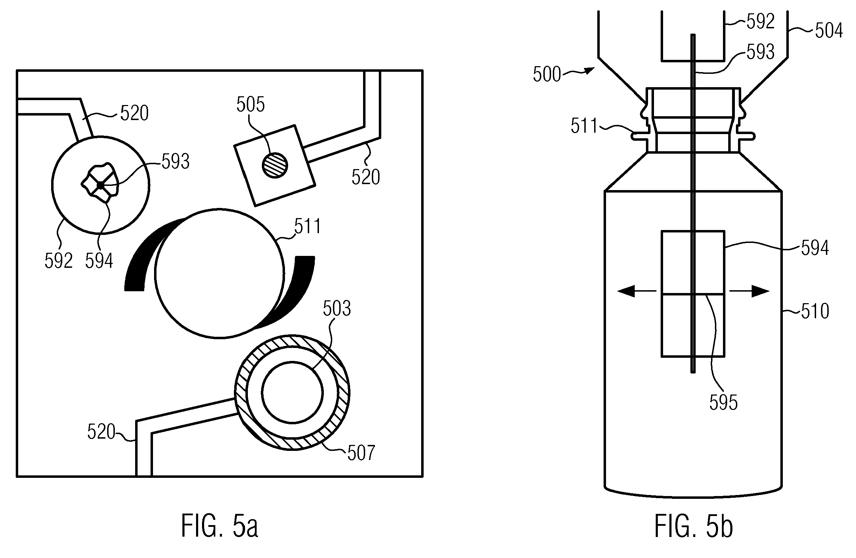

Weiterhin zeigt Fig. 5 eine erfindungsgemäße Vorrichtung unter Einbeziehung einer Etikettiervorrichtung 592. In der in Fig. 5a dargestellten Ausführungsform sind die Etikettiervorrichtung 592, die Extrusionsvorrichtung 507 und die Befüllvorrichtung 505 wieder beweglich vorgesehen, sodass sie in die Isoliervorrichtung 504 eingeführt werden können, ohne die Reinheit zumindest des Innenraums des Kunststoff-Liners 502 zu gefährden bzw. sodass sie innerhalb der Isoliervorrichtung 504 in Betriebsposition über dem PET-Behälter verfahren werden können. Sollten an die Etikettierung keine Sterilisationsbedingungen geknüpft sein, so ist es ebenfalls denkbar, diese nicht in die Isoliervorrichtung 504 einführbar zu gestalten und vor dem Anbringen selbiger zu positionieren. Die Etikettiervorrichtung 592 kann einen beweglichen Etikettierhalter 593 und ein aufgespanntes Etikett 594 umfassen. Ist die Etikettiervorrichtung 592 zu Beginn des Etikettiervorgangs konzentrisch zum PET-Behälters 510 positioniert, so wird der Etikettierhalter 593 mit dem aufgespannten Etikett 594 in den PET-Behälter 510 eingelassen, wie in Fig. 5b dargestellt.

Wie in Fig. 5b dargestellt, ist das aufgespannte Etikett vorzugsweise an Halterungen 595 aufgespannt, die beweglich sind. Befindet sich das aufgespannte Etikett 594 an der gewünschten Position innerhalb des PET-Behälters 510, so werden die Halterungen 595 ausgefahren und das Etikett an die Innenseite des PET-Behälters 510 gedrückt. Dabei können die Halterungen 595 so beschaffen sein, dass sie das Etikett während des Herandrückens an den PET-Behälter 510 bereits in die korrekte Position bringen. Es ist aber ebenso denkbar, dass das Etikett 594 durch die Halterungen 595 nur lose gegen die Innenwand des PET-Behälters 510 gedrückt wird und die schließliche Positionierung des Etiketts 594 durch den in den PET-Behälter 510 hineinextrudierten Kunststoff-Liner durchgeführt wird. Hier ergeben sich auch je nach Prozessführung unterschiedliche Ausführungsmöglichkeiten.

Fig. 6 zeigt eine mögliche Einbindung der Vorrichtung zum Erzeugen und Befüllen eines erfindungsgemäßen PET-Behälters 610 mit einem Kunststoff-Liner 602 in eine Prozesskette. In der vorgestellten Ausführungsform findet die Etikettierung, das Hineinextrudieren und das Befüllen sowie das Verschließen in jeweils getrennten Prozessabschnitten statt. Das macht die Verwendung von Transportbändern 650 und beispielsweise die Verwendung von Umlenksternen 621 bis 623 gegebenenfalls nötig. Die im Sinne der Erfindung unbearbeiteten PET-Behälter 610 können beispielsweise zu einem ersten Umlenkstern 621 gelangen. Dieser kann die unbearbeiteten PET-Behälter 610 auf zwei unterschiedliche Förderbänder verteilen, wobei eines der Förderbänder zur Etikettiervorrichtung 690 führt und ein anderes Förderband über einen weiteren Umlenkstern 623 beispielsweise direkt zur Extrusionsvorrichtung 670.

Eine solche Unterteilung von unbearbeiteten PET-Behältern 610 in zu etikettierende Behälter und in nicht zu etikettierende Behälter ist keinesfalls zwingend, kann sich jedoch als vorteilhaft erweisen. Die unbearbeiteten PET-Behälter 610, die von dem Umlenkstern 621 auf das Transportband, das zur Etikettiermaschine 690 führt, umgelenkt werden, sind jetzt zu etikettierende PET-Behälter 610'. Sie werden über das Förderband 650 beispielsweise direkt in die Vorrichtung zum Etikettieren 690 geführt, wo sie von Halterungen 691 aufgenommen werden und anschließend Ettikettiervorrichtungen 692 in Position gebracht werden. Hier kann die Weiterleitung der zu etikettierenden PET-Behälter 610' nur mit Hilfe der Halterungen 691 erfolgen oder über weitere Förderbänder durchgeführt werden.

Sind die PET-Behälter 610' etikettiert, so können sie beispielsweise über einen weiteren Umlenkstern 622 und ein entsprechendes Förderband 650 wieder in die Richtung der nicht etikettierten PET-Behälter 610 transportiert werden. Erreichen sie das entsprechende Förderband 650, so können sie über einen weiteren Umlenkstern 623 zusammen mit den unetikettierten PET-Behältern 610 auf ein zur Extrusionsvorrichtung 670 führendes Förderband 650 umgelenkt werden. In der Extrusionsvorrichtung 670 kann die Weiterleitung auch nur über Halterungen 611 oder mit zusätzlichen Förderbändern erfolgen. An jeder Flasche kann dann eine Isoliervorrichtung 604 angebracht werden, welche bis nach dem Befüllen in Position bleibt. Außerdem können in der Extrusionsvorrichtung 670 die Vorrichtungen zum Hineinextrudieren 607 und das Blasrohr 603 über den PET-Behältern 610 bzw. 610' positioniert werden. In der Extrusionsvorrichtung 670 wird der Kunststoff-Liner in den PET-Behälter 610 hineinextrudiert.

Im Falle eines etikettierten PET-Behälters 610' kann der Kunststoff-Liner beim Hineinextrudieren die schließliche Positionierung des Etiketts übernehmen. Findet die Befüllung des mit dem hineinextrudierten Kunststoff-Liner ausgestatteten PET-Behälters 610 nicht in der Extrusionsvorrichtung 670 statt, so wird nach Beendigung des Extrusionsvorgangs die Öffnung des PET-Behälters 610 bzw. 610' weiterhin durch eine Isoliervorrichtung 604 steril gehalten. Es kann vorgesehen sein, dass auch die Halterung 611 mit dem PET-Behälter 610 mitgeführt wird. Dadurch wird gewährleistet, dass zumindest der Innenraum des Kunststoff-Liners steril bleibt. Die mit dem hineinextrudierten Kunststoff-Liner ausgestatteten und mit der Isoliervorrichtung 604 und ggf. der Halterung 611 versehenen PET-Behälter 615 bzw. 615' gelangen dann zur Befüllvorrichtung 660, innerhalb der der Transport der PET-Behälter entweder nur mittels der Halterungen 611 oder mittels weiterer Förderbänder erfolgen kann. Innerhalb der Befüllvorrichtung wird das Befüllrohr 605 und ggf. die Verschlusswerkzeuge 608 über dem PET-Behälter positioniert und in die Isoliervorrichtung 604 eingeführt. Innerhalb der Befüllvorrichtung 660 werden die PET-Behälter durch das Befüllrohr 605 befüllt und anschließend wird der Kunststoff-Liner am oberen Ende abgeschnitten und durch die Verschlusswerkzeuge 608 des Weiteren verschlossen. Danach kann zu jedem Zeitpunkt die Isoliervorrichtung 604 von den PET-Behältern entfernt werden oder die PET-Behälter können die Isoliervorrichtung verlassen. Die dann befüllten und versiegelten PET-Behälter 616 bzw. 616' können durch ein weiteres Förderband aus der Befüllvorrichtung befördert und anderen Prozessabschnitten zugewiesen werden.

Die Prozessführung gemäß Fig. 6 kann abhängig von der Realisierung der Befüllvorrichtung, der Extrusionsvorrichtung, der Etikettiervorrichtung und der Isoliervorrichtung beispielsweise in einem Bauelement auch in nur einer Maschine erfolgen. Das kann zu Platzersparnissen führen, verringert aber gegebenenfalls die flexible Einteilung von beispielsweise zu etikettierenden und nicht zu etikettierenden PET-Behältern. Ebenso können beliebige Kombinationen einzelner Prozessschritte vollzogen werden. So kann beispielsweise die Vorrichtung zum Hineinextrudieren 670 und die Befüllvorrichtung 660 zusammengelegt werden, was den umständlichen Transport der mit den hineinextrudierten Kunststoff-Linern ausgestatteten PET-Behälter 615 und 615' mit separaten Isoliervorrichtungen 604 überflüssig machen würde. Ebenso ist eine Kombination der Etikettiervorrichtung 690 und der Extrusionsvorrichtung 670 denkbar, um ein Verrutschen des vorpositionierten Etiketts während des Transports von der Etikettiervorrichtung 690 zur Extrusionsvorrichtung 670 zu verhindern.

Ferner kann die Prozessführung wie in Fig. 1 beschrieben auch ohne separate Isoliervorrichtungen 604 vorgesehen sein und durch geeignete Belüftungssysteme mit Filteranlagen eine Sterilität der Luft im gesamten Produktionsraum erreicht werden. Das macht das Bereitstellen separater Isoliervorrichtungen 604 überflüssig, da der Reinraum deren Rolle übernimmt und erlaubt innerhalb des Reinraums die Einbindung beliebiger weiterer Prozessabschnitte, die dann so beschaffen sein müssen, dass ihre Durchführung keine zusätzlichen unmittelbaren (das bedeutet nicht durch Ventilation der Umgebungsluft zu beseitigende) Kontaminationsrisiken zumindest des Innenraums des Kunststoff-Liners im PET-Behälter 615 bzw. 615' bewirkt.

Den in den beschriebenen Ausführungsbeispielen erläuterten Vorrichtungen können Streckblasmaschinen direkt vorgelagert sein, die die entsprechenden PET-Behälter ausformen und direkt an die Vorrichtungen übergeben. Besonders vorteilhaft ist dabei die Verwendung von Streckblasmaschinen, die schon aseptische oder keimarme PET-Behälter produzieren. Dadurch wird schon von Prozessbeginn an das Kontaminationsrisiko minimiert und für den vollständigen Herstellungsprozess eine sehr kompakte Bauform erreicht.

## Patentansprüche

1. Vorrichtung zur Erzeugung und Befüllung eines Füllgutbehälters, insbesondere eines PET-Behälters (110), die eine Befüllvorrichtung und eine Extrusionsvorrichtung (107) zum Hineinextrudieren eines Kunststoff-Liners (102), dessen Innenseite steril ist, in den Füllgutbehälter umfasst, **dadurch gekennzeichnet, dass**:
eine Isoliervorrichtung (104) vorgesehen ist, die den Innenraum des Kunststoff-Liners (102) vom Hineinextrudieren in den Füllgutbehälter bis zum Befüllen steril hält, sodass
die Befüllung des Füllgutbehälters (110), ausgestattet mit dem hineinextrudierten Kunststoff-Liner (102), aseptisch durch die Befüllvorrichtung erfolgen kann.

2. Vorrichtung aus Anspruch 1, **dadurch gekennzeichnet, dass** die Befüllvorrichtung, die Extrusionsvorrichtung (207) und die Isoliervorrichtung (204) als eine Baueinheit ausgebildet sind.

3. Vorrichtung aus Anspruch 1 oder 2, **dadurch gekennzeichnet, dass** die Befüllvorrichtung während des Hineinextrudierens innerhalb der Extrusionsvorrichtung (207) angeordnet ist.

4. Vorrichtung aus Anspruch 1, **dadurch gekennzeichnet, dass** wenigstens eine Beförderungseinrichtung (650) zur Beförderung des Füllgutbehälters (110) vorgesehen ist, welche vom Prozessabschnitt des Hineinextrudierens des Kunststoff-Liners (102) zum Prozessabschnitt des Befüllens des Füllgutbehälters (110), ausgestattet mit dem hineinextrudierten Kunststoff-Liner (102), befördert.

5. Vorrichtung aus einem der Ansprüche 1 bis 4, **dadurch gekennzeichnet, dass** eine Etikettiervorrichtung (592), zur Etikettierung der Innenseite des PET-Behälters (110) vor dem Hineinextrudieren des Kunststoff-Liners (102) vorgesehen ist.

6. Vorrichtung aus einem der Ansprüche 1 bis 5, **dadurch gekennzeichnet, dass** die Befüllvorrichtung, die Extrusionsvorrichtung (207), die Etikettiervorrichtung (592) und die Isoliervorrichtung (204) als eine Baueinheit ausgebildet sind.

7. Vorrichtung nach einem der Ansprüche 1 bis 6, **dadurch gekennzeichnet, dass** der Kunststoff-Liner (102) Silber-Ionen enthält.

8. Verfahren zur Erzeugung und Befüllung eines Füllgutbehälters , insbesondere eines PET-Behälters (110), mittels einer Befüllvorrichtung und einer Extrusionsvorrichtung (107) zum Hineinextrudieren eines Kunststoff-Liners (102), dessen Innenseite steril ist, in den Füllgutbehälter, **dadurch gekennzeichnet, dass**:
die Innenseite des Kunststoff-Liners (102) vom Hineinextrudieren bis zum Befüllen steril gehalten wird, sodass
die Befüllung des Füllgutbehälters (110), ausgestattet mit dem hineinextrudierten Kunststoff-Liner (102), aseptisch stattfindet.

9. Verfahren aus Anspruch 8, **dadurch gekennzeichnet, dass** das Hineinextrudieren des Kunststoff-Liners (102) und das Befüllen des Füllgutbehälters (110), ausgestattet mit dem hineinextrudierten Kunststoff-Liner (102), in einem Prozessabschnitt stattfindet.

10. Verfahren aus Anspruch 8 oder 9, **dadurch gekennzeichnet, dass** ein Füllrohr (205) der Befüllvorrichtung während des Hineinextrudierens innerhalb der Extrusionsvorrichtung (207) angeordnet ist.

11. Verfahren aus Anspruch 8, **dadurch gekennzeichnet, dass** das Hineinextrudieren des Kunststoff-Liners (102) und das Befüllen des Füllgutbehälters (110), ausgestattet mit dem hineinextrudierten Kunststoff-Liner (102), in unterschiedlichen Prozessabschnitten erfolgt, wobei der Füllgutbehälter (110), ausgestattet mit dem hineinextrudierten Kunststoff-Liner (102), vom Prozessabschnitt des Hineinextrudierens zum Prozessabschnitt des Befüllens befördert wird.

12. Verfahren aus einem der Ansprüche 8 bis 11, **dadurch gekennzeichnet, dass** eine Etikettierung der Innenseite des PET-Behälters (110) vor dem Hineinextrudieren des Kunststoff-Liners (102) erfolgt.

13. Verfahren aus einem der Ansprüche 8 bis 12, **dadurch gekennzeichnet, dass** der Kunststoff-Liner (102) Silber-Ionen enthält.

## Claims

1. Device for producing and filling a filling material container, particularly a PET container (110), which comprises a filling device and an extrusion device (107) for extruding a plastic liner (102), the interior side of which is sterile, into the filling material container, **characterized in that**:
an isolating device (104) is provided, which keeps the interior of the plastic liner (102) sterile from the time of extrusion into the filling material container until filling, so that
the filling material container (110) equipped with the plastic liner (102) extruded therein can be aseptically filled by the filling device.

2. Device of claim 1, **characterized in that** the filling device, the extrusion device (207) and the isolating device (204) are configured as a constructional unit.

3. Device of claim 1 or 2, **characterized in that** the filling device is arranged within the extrusion device (207) during extrusion.

4. Device of claim 1, **characterized in that** at least one transporting device (650) is provided for transporting the filling material container (110), which transporting device carries out transportation from the process section of the extrusion of the plastic liner (102) to the process section of the filling of the filling material container (110), which is equipped with the plastic liner (102) extruded therein.

5. Device of one of claims 1 to 4, **characterized in that** a labeling device (592) is provided for labeling the interior side of the PET container (110) before the extrusion of the plastic liner (102) therein.

6. Device of one of claims 1 to 5, **characterized in that** the filling device, the extrusion device (207), the labeling device (592) and the isolating device (204) are configured as a constructional unit.

7. Device of one of claims 1 to 6, **characterized in that** the plastic liner (102) contains silver ions.

8. Method for producing and filling a filling material container, particularly a PET container (110), by means of a filling device and an extrusion device (107) for extruding a plastic liner (102), the interior side of which is sterile, into the filling material container, **characterized in that**
the interior side of the plastic liner (102) is kept sterile from the time of extrusion until filling, so that
the filling material container (110) which is equipped with the plastic liner (102) extruded therein can be aseptically filled.

9. Method of claim 8, **characterized in that** the extrusion of the plastic liner (102) and the filling of the filling material container (110), equipped with the plastic liner (102) extruded therein, takes place in one process section.

10. Method of claim 8 or 9, **characterized in that** a filling tube (205) of the filling device is arranged within the extrusion device (207) during extrusion.

11. Method of claim 8, **characterized in that** the extrusion of the plastic liner (102) and the filling of the filling material container (110), equipped with the plastic liner (102) extruded therein, takes place in different process sections, wherein the filling material container (110), equipped with the plastic liner (102) extruded therein, is transported from the process section of extrusion to the process section of filling.

12. Method of one of claims 8 to 11, **characterized in that** the interior side of the PET container (110) is labeled before the extrusion of the plastic liner (120) therein.

13. Method of one of claims 8 to 12, **characterized in that** the plastic liner (102) contains silver ions.

## Revendications

1. Dispositif de production et de remplissage d'un contenant à remplir de produit, notamment d'un contenant en PET (110), qui comprend un dispositif de remplissage et un dispositif d'extrusion (107) pour introduire par extrusion dans le contenant à remplir de produit, une doublure de matière plastique (102) dont le côté intérieur est stérile,
**caractérisé**
**en ce qu'**il est prévu un dispositif d'isolation (104), qui maintient stérile l'espace intérieur de la doublure de matière plastique (102), à partir de l'introduction par extrusion dans le contenant à remplir de produit jusqu'au remplissage, de sorte que
le remplissage du contenant (110) à remplir de produit, équipé de la doublure de matière plastique (102) y ayant été introduite par extrusion, peut s'effectuer de manière aseptisée par le dispositif de remplissage.

2. Dispositif d'après la revendication 1,
**caractérisé en ce que** le dispositif de remplissage, le dispositif d'extrusion (207) et le dispositif d'isolation (204) sont réalisés sous la forme d'une unité de construction.

3. Dispositif d'après la revendication 1 ou la revendication 2, **caractérisé en ce que** le dispositif de remplissage est agencé à l'intérieur du dispositif d'extrusion (207) pendant l'introduction par extrusion.

4. Dispositif d'après la revendication 1,
**caractérisé en ce qu'**il est prévu au moins un dispositif de transport (650) pour le transport du contenant (110) à remplir de produit, qui assure le transport de la tranche de processus de l'introduction par extrusion de la doublure de matière plastique (102) à la tranche de processus du remplissage du contenant (110) à remplir de produit, équipé de la doublure de matière plastique (102) y ayant été introduite par extrusion.

5. Dispositif d'après l'une des revendications 1 à 4, **caractérisé en ce qu'**il est prévu un dispositif d'étiquetage (592) pour étiqueter le côté intérieur du contenant de PET (110) avant l'introduction par extrusion de la doublure de matière plastique (102).

6. Dispositif d'après l'une des revendications 1 à 5, **caractérisé en ce que** le dispositif de remplissage, le dispositif d'extrusion (207), le dispositif d'étiquetage (592) et le dispositif d'isolation (204) sont réalisés sous la forme d'une unité de construction.

7. Dispositif d'après l'une des revendications 1 à 6, **caractérisé en ce que** la doublure de matière plastique (102) renferme des ions argent.

8. Procédé de production et de remplissage d'un contenant à remplir de produit, notamment d'un contenant en PET (110), au moyen d'un dispositif de remplissage et d'un dispositif d'extrusion (107) pour introduire par extrusion dans le contenant à remplir de produit, une doublure de matière plastique (102) dont le côté intérieur est stérile,
**caractérisé**
**en ce que** le côté intérieur de la doublure de matière plastique (102) est maintenu stérile à partir de l'introduction par extrusion jusqu'au remplissage, de sorte que
le remplissage du contenant (110) à remplir de produit, équipé de la doublure de matière plastique (102) y ayant été introduite par extrusion, est effectué de manière aseptisée.

9. Procédé d'après la revendication 8, **caractérisé en ce que** l'introduction par extrusion de la doublure de matière plastique (102) et le remplissage du contenant (110) à remplir de produit, équipé de la doublure de matière plastique (102) y ayant été introduite par extrusion, ont lieu dans une tranche de processus.

10. Procédé d'après la revendication 8 ou la revendication 9, **caractérisé en ce qu'**un tube de remplissage (205) du dispositif de remplissage est agencé à l'intérieur du dispositif d'extrusion (207) pendant l'introduction par extrusion.

11. Procédé d'après la revendication 8, **caractérisé en ce que** l'introduction par extrusion de la doublure de matière plastique (102) et le remplissage du contenant (110) à remplir de produit, équipé de la doublure de matière plastique (102) y ayant été introduite par extrusion, s'effectuent dans des tranches de processus différentes, le contenant (110) à remplir de produit, équipé de la doublure de matière plastique (102) y ayant été introduite par extrusion, étant transporté de la tranche de processus de l'introduction par extrusion à la tranche de processus du remplissage.

12. Procédé d'après l'une des revendications 8 à 11, **caractérisé en ce que** l'on effectue un étiquetage du côté intérieur du contenant de PET (110) avant l'introduction par extrusion de la doublure de matière plastique (102).

13. Procédé d'après l'une des revendications 8 à 12, **caractérisé en ce que** la doublure de matière plastique (102) renferme des ions argent.
